(19) Europäisches Patentamt
European Patent Office
Office européen des brevets

(11) **EP 2 142 597 B1**

(12) **EUROPEAN PATENT SPECIFICATION**

(45) Date of publication and mention
of the grant of the patent:
**03.04.2013 Bulletin 2013/14**

(51) Int Cl.:
***C08L 29/04*** (2006.01)   ***C08L 33/04*** (2006.01)

(21) Application number: **07833018.0**

(22) Date of filing: **21.09.2007**

(86) International application number:
**PCT/KR2007/004639**

(87) International publication number:
**WO 2008/133375 (06.11.2008 Gazette 2008/45)**

(54) **ACRYLIC ACID ESTER COPOLYMER COMPOSITION AND REDISPERSIBLE POWDERS**

ACRYLSÄUREESTERCOPOLYMERZUSAMMENSETZUNG UND REDISPERGIERBARE PULVER

COMPOSITION DE COPOLYMÈRE À BASE D'ESTER D'ACIDE ACRYLIQUE ET POUDRES REDISPERSIBLES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.04.2007 KR 20070041367**

(43) Date of publication of application:
**13.01.2010 Bulletin 2010/02**

(73) Proprietor: **Youngwoo Chemtech CO., LTD.
Gyeonggi-do 425-834 (KR)**

(72) Inventor: **SON, Jeong Woo
Siheung-si
Gyeonggi-do 429-451 (KR)**

(74) Representative: **Vossius & Partner
Siebertstrasse 4
81675 München (DE)**

(56) References cited:
**WO-A1-99/16794      WO-A1-2005/108519
JP-A- 09 025 381      JP-A- 2001 072 705
JP-A- 2006 028 381    US-A- 3 755 234
US-A- 3 996 181**

**Description**

[Technical Field]

The present invention relates to an acrylic acid ester copolymer composition, and redispersible powders made therefrom. More specifically, the present invention relates to an acrylic acid ester-based copolymer emulsion composition having excellent polymerization stability, and improved water resistance, alkali resistance, and fluidity, and redispersible powders made from the composition.

[Background Art]

Generally, when emulsion polymerization is performed using monomers such as acrylic monomers and styrenic monomers, an anionic or nonionic surfactant is used as an emulsifier. However, the emulsion prepared by using a surfactant has poor chemical stability when combined with an electrolyte, and as a result, if it is added to cement, or the like, there may be caused a problem that the fluidity of the cement composition is deteriorated.
In order to overcome such problem associated with the use of the surfactant, polyvinyl alcohol could be used as a protective colloid. In this case, the chemical stability was improved, but the polymerization stability was deteriorated, thereby still entailing a problem that a stable emulsion is hardly obtained.
Accordingly, there has been proposed a method involving using modified polyvinyl alcohol in which a functional group such as a mercapto group is introduced to one end, as a protective colloid, or a chain transfer agent in combination, to improve the polymerization stability. However, this method leads to a reduced degree of polymerization, and as a result, it cannot satisfy water resistance, mechanical strength, durability, or the like.
On the other hand, a synthetic resin emulsion, such as those of a vinyl acetate resin and an acrylic resin, has been widely used in the field such as an adhesive, a coating agent, and a cement additive.
This emulsion is typically supplied in a liquid form. However, the liquid emulsion has a problem in that it requires high cost of transportation during the supply, and it can be frozen in the winter season, and as a result, its product quality varies over time.
For the purpose of solving the problem as above, the liquid emulsion is dried to form emulsion powders, which are used in various applications. However, the synthetic resin emulsion powders should be redispersed in water for use, and accordingly, the powders are required to have excellent redispersibility.

[Disclosure]

[Technical Problem]

Under these circumstances, the present invention has been made to solve the afore-mentioned problems. It is an object of the present invention to provide an acrylic acid ester copolymer composition having excellent polymerization stability, and improved water resistance, alkali resistance, and fluidity, and redispersible powders made therefrom.
The other objects and advantages of the present invention will be further illustrated with reference to the following description, and be apparent from the following Examples, Further, the objects and advantages of the present invention can be realized using the means and combinations, as defined in the appended claims.

[Technical Solution]

The acrylic acid ester copolymer emulsion composition according to one aspect of the present invention comprises polyvinyl alcohol (referred to as "PVA" hereinafter), hydrophilic ethylenic unsaturated monomers, hydrophobic ethylenic unsaturated monomers, and a lipophilic initiator.
The redispersible acrylic acid ester copolymer powders according to another aspect of the present invention are prepared by a spray-dry of the acrylic acid ester copolymer emulsion composition.
Further, there is provided an inorganic hydraulic composition comprising redispersible acrylic acid ester copolymer powders, and an inorganic hydraulic material, wherein 1 to 30 parts by weight of the redispersible acrylic acid ester copolymer powders are preferably mixed with 100 parts by weight of the inorganic hydraulic material.

[Advantageous Effects]

The acrylic acid ester emulsion copolymer composition, and the redispersible powders according to the present invention provide the effects as follows.
The acrylic acid ester copolymer composition prepared according to the present invention exhibits effects of yielding excellent polymerization stability, and improved water resistance, alkali resistance, and fluidity, and the redispersible powders prepared by a spray-dry of the acrylic acid ester copolymer composition has improved water redispersibility, and thus, can be used in various fields such as an additive to a hydraulic material, a powder paint, and an adhesive.

[Best Mode]

The terms and words which are used in the present specification and the appended claims should not be construed as being confined to common meanings or dictionary meanings but be construed as meanings and concepts matching with the technical spirit of the present invention based on the principle that an inventor can properly define the concept of a term to describe his/her invention in the best fashion.

Therefore, Examples and constitutions as described herein do not cover all the technical spirit of the present invention but are merely the most preferred embodiments of the present invention. Thus, it should be understood that various equivalents and modifications can be made to the embodiments at the time of filing this application.

The acrylic acid ester copolymer emulsion composition according to the present invention comprises PVA having a degree of saponification of 85 mol% or more, and an average degree of polymerization of 300 to 1400, hydrophilic ethylenic unsaturated monomers having a water solubility of 1% or more, hydrophobic ethylenic unsaturated monomers having a water solubility of less than 1%, and a lipophilic initiator.

The acrylic acid ester copolymer emulsion composition comprises 4 to 15 parts by weight of PVA, and 0.01 to 1 part by weight of the lipophilic initiator, based on 100 parts by weight of the total monomers consisting of 20 to 70% by weight of the hydrophilic ethylenic unsaturated monomers, and 80 to 30% by weight of the hydrophobic ethylenic unsaturated monomers.

As used herein, the total monomers mean the monomers consisting of the hydrophilic ethylenic unsaturated monomers and the hydrophobic ethylenic unsaturated monomers.

The PVA is a substance which is used as an emulsifier for emulsion polymerization, and the polymerization stability can be improved by using modified PVA, to which a functional group such as a mercapto group is introduced, in the emulsion polymerization. However, the use of modified PVA reduces the degree of polymerization, thereby leading to a problem that physical properties such as water resistance, mechanical strength, and durability are not assured. Thus, it is herein not recommended to use modified PVA.

PVA used as an emulsifier has a degree of saponification of 85 mol% or more, preferably 90 mol% or more. If PVA has a degree of saponification of less than 85 mol%, polymerization may not proceed stably, and thus, a good emulsion may not be formed.

Further, PVA has an average degree of polymerization of 300 to 1400, preferably 300 to 600. If PVA has an average degree of polymerization of less than 300, the protective colloid ability of the particles may be insufficient, or polymerization may not proceed stably. If PVA has an average degree of polymerization of more than 1400, polymerization does not proceed stably due to the increased viscosity of the emulsion composition, and thus, a good emulsion cannot be formed.

PVA is used preferably in an amount of 4 to 15 parts by weight, more preferably in an amount of 6 to 9 parts by weight, based on 100 parts by weight of the total monomers contained in the emulsion composition. If the amount of PVA is less than 4 parts by weight, polymerization stability may be deteriorated, whereas if the amount of PVA is more than 15 parts by weight, polymerization may not proceed stably due to the increased viscosity.

On the other hand, the degree of saponification and the average degree of polymerization of PVA can be measured by commonly well-known methods, for example, in accordance with calculation methods as described in KS M 3013.

The hydrophilic ethylenic unsaturated monomers used in the emulsion composition of the present invention have a water solubility of 1.0% or more. As the hydrophilic ethylenic unsaturated monomers, at least one selected from the group consisting of methyl (meth)acrylate, ethyl acrylate, dimethyl(ethyl)aminoethyl methacrylate, vinyl acetate, vinyl propionate, (meth)acrylonitrile, (meth)acrylamide, diacetone acrylamide, glycidyl methacrylate, 2-hydroxyethyl methacrylate, hydroxypropyl methacrylate, methoxyethyl (meth)acrylate, and ethoxyethyl (meth)acrylate can be used.

The hydrophilic ethylenic unsaturated monomers are used in an amount of 20 to 70% by weight, preferably in an amount of 40 to 60% by weight, based on 100 parts by weight of the total monomers contained in the emulsion composition.

The hydrophobic ethylenic unsaturated monomers used in the emulsion composition of the present invention have a water solubility of 1.0% or less. As the hydrophobic ethylenic unsaturated monomers, at least one selected from the group consisting of n-butyl (meth)acrylate, i-butyl (meth)acrylate, t-butyl (meth)acrylate, 2-ethylhexyl (meth)acrylate, stearyl (meth)acrylate, lauryl (meth)acrylate, tridecyl methacrylate, cyclohexyl methacrylate, acetoacetoxyethyl methacrylate, and styrene can be used.

The hydrophobic ethylenic unsaturated monomers are used in an amount of 80 to 30% by weight, and preferably in an amount of 60 to 40% by weight, based on 100 parts by weight of the total monomers contained in the emulsion composition.

As the initiator used in the emulsion composition of the present invention, a lipophilic initiator is used. As the lipophilic initiator, at least one organic peroxide selected from the group consisting of benzoyl peroxide, lauryl peroxide, succinic peroxide, t-butyl peroxymaleic acid, t-butyl hydroperoxide, azobisdimethylvaleronitrile, and azoisobutyronitrile can be used.

Preferably, from the viewpoint of convenience in use, succinic peroxide, t-butyl peroxymaleic acid, or t-butyl hydroperoxide can be used.

The lipophilic initiator is used in an amount of 0.01 to 1 part by weight, preferably 0.05 to 0.5 part by weight, based on 100 parts by weight of the total monomers.

On the other hand, the acrylic acid ester copolymer emulsion composition according to the present invention can further comprise additional components, if desired. For example, a reducing agent, a polymerization controlling agent, a co-emulsifier, or the like can be selectively used, provided that it does not interfere with the properties of the emulsion composition.

The reducing agent can be used, if the temperature at which a radical generated from the organic peroxide as the lipophilic initiator has a half-life of 10 hours is higher than 90°C. As the reducing agent, a reducing organic compound or a reducing inorganic compound can be used.

The reducing agent, if any, is used in an amount of 0.05 to 3 equivalents, preferably 0.5 to 2 equivalents, based on the amount of the polymerization initiator.

As the reducing organic compound, at least one selected from the group consisting of L-ascorbic acid, tartaric acid, sodium organosulfinate, and formaldehyde sulfoxylate, metal salts, can be used. As the reducing inorganic compound, at least one selected from the group consisting of sodium sulfates, such as sodium thiosulfate, acidic sodium sulfite, and sodium metabisulfite, can be used.

As the polymerization controlling agent which is generally used in the emulsion polymerization, a chain transfer agent, a buffer, or the like can be used according to the purposes. However, if the chain transfer agent is used, the degree of polymerization of an acrylic polymer is reduced, and as a result, there is a problem that water resistance and durability among the technical properties of the obtained emulsion are decreased. Accordingly, it is preferable not to use a chain transfer agent in the acrylic acid ester copolymer emulsion composition of the present invention.

As the buffer, sodium acetate, sodium phosphate dibasic, or sodium sulfate, or a mixture of two or more kinds thereof can be used.

As the co-emulsifier which may be contained in the emulsion composition, any one selected from an anionic, cationic, or nonionic surfactant, a water-soluble polymer having a protective colloid function, and a water-soluble oligomer can be used. However, if the co-emulsifier is used in a large amount, there is a problem that fusion and adhesion proceed while the emulsion composition is dried, thereby leading to reduced redispersibility. For this reason, it is preferable that a surfactant be not used as a co-emulsifier in the acrylic acid ester copolymer emulsion composition of the present invention.

Examples of the water-soluble polymer having a protective colloid function other than PVA include hydroxyethyl cellulose, polyvinyl pyrrolidone, methyl cellulose, and a starch derivative. The water-soluble polymer modulates the viscosity when an emulsion composition is spray-dried into as an emulsion powder.

However, depending on the amount of the water-soluble polymer to be used, the redispersibility of the redispersible emulsion powder may be reduced. Thus, the redispersible emulsion powders, if used, are preferably used within the range not interfering with the redispersibility of the redispersible emulsion powders.

The water-soluble oligomer may be a polymer or copolymer having a degree of polymerization of 10 to 500, which contains a hydrophilic group such as a sulfonate group, a carboxyl group, a hydroxyl group, and an alkyleneglycol group. As the water-soluble oligomer, at least one selected from the group consisting of amide copolymers such as a 2-methacrylamide/2-methylpropanesulfonic acid copolymer, a sodium methacrylate/4-styrenesulfonate copolymer, a styrene/maleic acid copolymer, and poly(meth)acrylate can be used.

Among the afore-mentioned water-soluble oligomers, a 2-methacrylamide/2-methylpropanesulfonic acid copolymer, or a sodium methacrylate/4-styrene-sulfonate copolymer is preferably used from the viewpoint of redispersibility in water, and working stability with an inorganic hydraulic component.

Further, the water-soluble oligomer which has been preliminarily polymerized before initiating the emulsion polymerization may be used.

The acrylic acid ester copolymer emulsion composition is a typical, uniform and milky white composition, and has an average particle diameter of 0.05 to 2.0 $\mu$m, preferably 0.5 to 1.0 $\mu$m. The average particle diameter of the emulsion composition can be measured by a well-known method, for example, by using laser diffraction, and a scattering particle size distribution analyzer.

On the other hand, an additive may be added to the emulsion composition after emulsion polymerization, if desired. Examples of the additive include an organic pigment, an inorganic pigment, a water-soluble additive, a pH modulator, a preservative, and an anti-oxidant.

The water-soluble additive can be added so as to improve the redispersibility of the powders obtained by a spray-dry of the emulsion composition, and the fluidity and adhesiveness of the redispersed emulsion. The water-soluble additive, if any, is added to the emulsion composition after emulsion polymerization and before drying.

The water-soluble additive is used preferably in an amount of 1 to 50 parts by weight, based on 100 parts by weight of the non-volatiles of the aqueous emulsion before drying. If the amount of the water-soluble additive is more than 50 parts by weight, the water resistance of the redispersible emulsion powder is insufficient, whereas if the amount of the water-soluble additive is less than 1 part by weight, improvement in redispersibility, fluidity, or adhesiveness may be insufficient.

As the water-soluble additive, at least one selected from the group consisting of polyvinyl alcohol (including cationic PVA), hydroxyethyl cellulose, methyl cellulose, a starch derivative (starch ether, including cationic starch), polyvinyl pyrrolidone, polyethylene oxide, a water-soluble alkyd resin, a water-soluble phenol resin, a water-soluble urea resin, a water-soluble melamine resin, a water-soluble guanamine resin, a water-soluble naphthalenesulfonic acid resin, a water-soluble amino resin, a water-soluble polyamide resin, a water-soluble acrylic resin, a water-soluble polycarboxylic acid resin, a water-soluble polyester resin, a water-soluble polyurethane resin, a water-soluble polyol resin, a water-soluble epoxy resin, and a cationizing agent can be used.

Among the above-mentioned water-soluble additives, PVA and a derivative thereof, and starch ether are effective for improving redispersibility, fluidity, and adhesiveness. PVA used as the water-soluble additive may be the same or different compound from those used as an emulsifier in the polymerization process.

The acrylic acid ester copolymer emulsion composition according to the present invention is excellent in polymerization stability and mechanical stability, and as a result, it can be suitably used in various fields of a cement/mortar admixing agent, varnishes, construction materials, paints, adhesives, fiber and paper processing agents, and inorganic binders.

On the other hand, there are provided redispersible acrylic acid ester copolymer powders prepared by a spray-dry of the acrylic acid ester copolymer emulsion composition.

As used herein, the term "redispersibility" means the property of powders to be redispersed in a water-based medium, such as water, to form an emulsion.

An anti-blocking agent can be used in combination, through mixing it with the emulsion powders produced after a spray-dry of, or through mixing it with the emulsion during a spray-dry of.

As the anti-blocking agent, generally well-known inactive, inorganic or organic powders, such as calcium carbonate, talc, clay, anhydrous silicic acid, aluminum silicate, white carbon, and alumina white, can be used. Among these, anhydrous silicic acid, calcium carbonate, talc, or clay, each having an average particle diameter of 0.01 to 0.5 μm, are preferably used in combination.

The anti-blocking agent is used in an amount of 2 to 30% by weight, based on 100% by weight of the redispersible emulsion powders produced after a spray-dry of the composition.

The redispersible acrylic acid ester copolymer powders can be used in various fields such as an additive to a hydraulic material, a powder paint, and an adhesive, and preferably used as an additive to various hydraulic materials such as cement and gypsum.

The redispersible acrylic acid ester copolymer powders are mixed with an inorganic hydraulic material to produce an inorganic hydraulic composition.

By adding the hydraulic material to the redispersible acrylic acid ester copolymer powders provided according to the present invention, there is obtained an advantage of improvement in the adhesive power under the wetting condition, as well as improvement in the adhesive power under an ordinary condition.

As the inorganic hydraulic material contained in the inorganic hydraulic composition, at least one selected from various cement-based materials such as portland cement, early strength cement, and rapid hardening cement, various gypsum-based materials such as inorganic gypsum, hemihydrate gypsum, and calcined gypsum, and blast furnace slag can be used.

The redispersible acrylic acid copolymer powders are preferably contained in an amount of 1 to 30 parts by weight, more preferably 5 to 20 parts by weight, based on 100 parts by weight of the inorganic hydraulic material. If the content of the redispersible acrylic acid copolymer powders is less than 1 part by weight, improvement in the adhesive power is insufficient, whereas if the content is more than 30 parts by weight, there is a problem that the hydraulic material doest not exhibit its ordinary performances.

On the other hand, the inorganic hydraulic composition can further comprise additional substances, and the additional substances can be selected from fly ash, limestone powders, calcium hydroxide, and calcium carbonate.

Hereinbelow, the methods for preparing the acrylic acid ester copolymer emulsion composition, and the redispersible powders made therefrom according to another aspect of the present invention will be described

The acrylic acid ester copolymer emulsion composition according to the present invention can be prepared by performing emulsion polymerization under such a condition that facilitates graft polymerization to PVA having a degree of saponification of 85 mol% or more.

As used herein, the expression "emulsion polymerization under such a condition that facilitates graft polymerization" means that emulsion polymerization which is carried out using a lipophilic initiator at 20 to 90 °C.

Examples of the method for emulsion polymerization include a batch emulsion polymerization method comprising adding water, an emulsifier, monomers, and the like to a polymer at one, elevating the temperature of the mixture, and adding an appropriate amount of a polymerization initiator thereto to perform polymerization; a monomer dropwise emulsion polymerization method comprising adding water and an emulsifier to a polymer, elevating the temperature of the mixture, and dropping monomers; and an emulsion monomer dropwise emulsion polymerization method comprising first emulsifying monomers using an emulsifier and water, and then dropping the emulsion, but the present invention is not limited to these emulsion polymerization methods. In the present invention, the acrylic copolymer emulsion composition is prepared using a monomer dropwise emulsion polymerization method.

Generally, emulsion polymerization can be carried out by further using additional components such as a polymerization initiator, a polymerization controlling agent, and a co-emulsifier, if desired, in addition to the emulsifier and the monomer components, as described above.

On the other hand, the redispersible powders can be prepared by drying the acrylic acid ester copolymer emulsion composition. Examples of the drying method include a spray-dry of, freeze-drying, and hot air-drying. Among these, a spray-dry of is preferably used from the viewpoint from re-emulsibility and productivity.

In the case of a spray-dry of, the spraying mode is not particularly limited, but spray can be performed using any of discs, nozzles, or the like, for example. Examples of the heat source include hot air and hot steam. The a spray-dry of temperature is preferably in the range of 70°C to 150°C.

Specifically, the a spray-dry of treatment in the present invention involves modulating the content of the non-volatiles of the emulsion, continuously supplying the non-volatiles to a spray-drier, and drying the generated mist using hot air, thereby obtaining powders.

Hereinbelow, Examples of the present invention will be described in detail.

[Mode for Invention]

Example 1

Preparation of Acrylic-Acid Ester Copolymer Emulsion Composition

130 parts by weight of water, 8 parts by weight of PVA having an average degree of polymerization of 500 and a degree of saponification of 98.0 to 99.0 mol% (Product Name: Polinol F05, manufactured by DC Chemical Co., Ltd., Korea), and 0.3 part by weight of sodium acetate as a buffer were fed into a reaction flask equipped with a stirrer, a thermometer, a condenser, and a dropping lot, and PVA was dissolved in water by heating the reaction flask to 80°C.

Next, the temperature of the reaction flask was maintained at 80°C, 5 parts by weight of butyl acrylate (referred to as "BA" hereinafter) and 5 parts by weight of methyl methacrylate (referred to as "MMA" hereinafter) were added to the reaction flask, and then 0.1 part by weight of t-butyl peroxymaleic acid (referred to as "t-BPM" hereinafter) as a polymerization initiator, and 0.1 part by weight of L-ascorbic acid (referred to as "L-ASA" hereinafter) as a reducing agent were further added into to the reaction flask, to perform a emulsion polymerization reaction for 1 hour.

Further, the monomer components, 45 parts by weight of BA , 45 parts by weight of MMA, 0.4 part by weight of t-BPM as an initiator, and 0.4 part by weight L-ASA as a reducing agent were dropped into the reaction flask for about 4 hours to perform a dropwise polymerization reaction. After completion of dropping, the product was matured, and cooled to complete the reaction.

By using such preparation method, an aqueous acrylic copolymer emulsion composition (Composition 1) having a solid content of about 45% by weight was obtained.

Example 2

An emulsion composition (Composition 2) was obtained in the same manner as in Example 1, except that the PVA was changed to a PVA having an average degree of polymerization of 500, and a degree of saponification of 85.5 to 87.5 mol% (Product Name: Polinol P05, manufactured by DC Chemical Co., Ltd., Korea).

Example 3

An emulsion composition (Composition 3) was obtained in the same manner as in Example 1, except that the PVA was changed to a PVA having an average degree of polymerization of 1300, and a degree of saponification of 92.5 to 94.5 mol% (Product Name: PVA-613, manufactured by Kuraray Co., Ltd.), the initiator was changed to benzoyl peroxide (referred to as "BPO" hereinafter), no reducing agent was used, and the mixing ratio of BA : MMA was 4 : 6.

On the other hand, during the emulsion reaction, BA and MMA were added to the reaction flask in the amounts of 4 parts by weight and 6 parts by weight, respectively, and during the dropwise polymerization reaction, BA and MMA were fed to the reaction flask in the amounts of 36 parts by weight and 54 parts by weight, respectively.

Example 4

An emulsion composition (Composition 4) was obtained in the same manner as in Example 1, except that the PVA was changed to a PVA having an average degree of polymerization of 1000, and a degree of saponification of 87.0 to 89.0 mol% (Product Name: PVA-210, manufactured by Kuraray Co., Ltd.), the initiator was changed to t-butyl hydroperoxide (referred to as "t-BHP" hereinafter), no reducing agent was used, and the mixing ratio of BA : MMA is 6 : 4.

On the other hand, during the emulsion reaction, BA and MMA were added in the amounts of 6 parts by weight and 4 parts by weight, respectively, to the reaction flask, and during the dropwise polymerization reaction, BA and MMA were fed in the amounts of 54 parts by weight and 36 parts by weight, respectively, to the reaction flask.

Comparative Example 1

Emulsion polymerization was performed in the same manner as in the preparation method of Example 1, except that the PVA was changed to a PVA having an average degree of polymerization of 1700, and a degree of saponification of 94.5 to 95.5 mol% (Product Name: PVA-617, manufactured by Kuraray Co., Ltd.). However, the viscosity was increased during the polymerization, and as a result, a stable emulsion composition (Composition 5) could not obtained.

Comparative Example 2

Emulsion polymerization was performed in the same manner as in the preparation method of Example 1, except that the PVA was changed to a PVA having an average degree of polymerization of 200, and a degree of saponification of 98.0 to 99.0 mol% (Product Name: PVA-102, manufactured by Kuraray Co., Ltd.). However, high viscosity was shown ('dilatancy' phenomenon) during the polymerization, and as a result, a stable emulsion composition (Composition 6) could not obtained.

Comparative Example 3

Emulsion polymerization was performed in the same manner as in the preparation method of Example 1, except that the ratio of BA : MMA was changed to 90 : 10, the initiator was changed to BPO, and no reducing agent was used. However, a polymerization reaction did not proceed, and as a result, a stable emulsion composition (Composition 7) could not obtained.

Comparative Example 4

Emulsion polymerization was performed in the same manner as in the preparation method of Example 1, except that the PVA was changed to a PVA having an average degree of polymerization of 500, and a degree of saponification of 85.5 to 87.5 mol% (Product Name: P05, manufactured by DC Chemical Co., Ltd., Korea), the initiator was changed to ammonium persulfate (referred to as "APS", hereinafter), and no reducing agent was used. However, a polymerization reaction did not proceed, and as a result, a stable emulsion composition (Composition 8) could not obtained.

The specifications of Examples and Comparative Examples are summarized in Table 1 below.

[Table 1]

|  | PVA | | Monomers | | | Initiator | Reducing agent |
|---|---|---|---|---|---|---|---|
|  | Degree of polymerization | Degree of saponification (mol%) | Hydrophobic monomers (parts by weight) | ic monomers (parts by weight) | Addition method | | |
| Example 1 | 500 | 99 | 50 | 50 | Dropping | t-BPM[(1)] | L-ASA[(5)] |
| Example 2 | 500 | 86 | 50 | 50 | Dropping | t-BPM | L-ASA |
| Example 3 | 1300 | 93 | 40 | 60 | Dropping | BPO[(2)] | - |

(continued)

| | PVA | | Monomers | | | Initiator | Reducing agent |
|---|---|---|---|---|---|---|---|
| | Degree of polymerization | Degree of saponification (mol%) | Hydrophobic monomers (parts by weight) | ic monomers (parts by weight) | Addition method | | |
| Example 4 | 1000 | 88 | 60 | 40 | Dropping | t-BHP[3] | L-ASA |
| Comparative Example 1 | 1700 | 95 | 50 | 50 | Dropping | t-BPM | L-ASA |
| Comparative Example 2 | 200 | 99 | 50 | 50 | Dropping | t-BPM | L-ASA |
| Comparative Example 3 | 500 | 99 | 90 | 10 | Dropping | BPO | - |
| Comparative Example 4 | 500 | 86 | 50 | 50 | Dropping | APS[4] | - |
| (1) t-BPM : t-Butyl peroxymaleic acid<br>(2) BPO : Benzoyl peroxide<br>(3) t-BHP : t-Butyl hydroperoxide<br>(4) APS : Ammonium persulfate<br>(5) L-ASA : L-Ascorbic acid | | | | | | | |

In Examples and Comparative Examples, PVA, the initiator, and the reducing agent were added in the amounts of 8 parts by weight, 0.5 part by weight, and 0.5 part by weight, respectively, based on 100 parts by weight of the total monomers.

Preparation of Redispersible Acrylic Acid Ester Copolymer Emulsion Powders

To 100 parts by weight of the emulsion composition 1, 50 parts by weight of a 20 wt% solution of PVA (Product Name: P05, manufactured by DC Chemical Co., Ltd., Korea) as a water-soluble additive was added, and the mixture was spray-dried in the presence of 15 parts by weight of an anti-blocking agent (SE-SUPER manufactured by NAINTSCH, dolomite talc) to obtain emulsion powders.

Emulsion powders were prepared in the same manner as described above, except that the emulsion composition 1 was changed to the emulsion compositions 2, 3, and 4.

On the other hand, an emulsion composition could not be obtained from Compositions 5 to 8, and as a result, redispersible powders could not be also prepared therefrom.

<Evaluation test>

Test 1: Polymerization Stability

Whether each of the emulsion compositions was gelled during the polymerization was confirmed. If the emulsion composition was not gelled, the produced emulsion was filtered through a 200-mesh Pylen sieve (ASTM standard sieve). After filtration, the weight of the filtrate was measured. The contents of the residues (mg/100 g EM) per 100 g of the solid content of the emulsion are shown in Table 2. If the content of the residue after filtration was 30 mg or less, the polymerization stability was evaluated to be excellent.

Test 2: Fluidity

TI (Thixotropic Index Value) was calculated by measuring the viscosities at 6 rpm and 60 rpm of each of the emulsion compositions using a Brookfield-type viscometer. If the TI was 2.5 or less, the fluidity was evaluated to be excellent.

$\eta$ at 6 rpm/ $\eta$ at 60 rpm = TI

Test 3: Redispersiblility

100 parts by weight of the prepared redispersible emulsion powders were mixed with 100 parts by weight of deionized water using a stirrer to obtain a redispersion. The redispersion was put into a glass tube, and left to stand at room temperature. The redispersion was evaluated using the following criteria:

A: State where a uniform redispersion was obtained, and precipitation of the emulsion powders was not substantially observed;
B: State where the redispersion is separate into two phases, that is, a transparent liquid phase, and a precipitated emulsion powder phase; and
- : State where no emulsion powder is prepared.

Test 4: Test on water resistant adhesion strength of cement mortar

Cement materials with a ratio of portland cement: standard sand = 1 : 3, and the redispersible emulsion powders obtained in Examples 1 to 4 were blended at a ratio of 10 : 1, and the blend was further added with water to adjust a flow value to be 170±5.

Next, the surface of a mortar substrate ($70 \times 70 \times 20$ mm) was abraded with an abrasive paper of KS Regulation No. 150. Each specimen was formed on this substrate using a mold, and the obtained specimen was immersed in water for 24 hours. Then, the adhesion strength was measured in the wet state using a universal test machine (manufactured by Shimadzu Corporation).

Cement materials with a ratio of portland cement: standard sand = 1 : 3, and the redispersible emulsion powders obtained in Examples 1 to 4 were blended at a ratio of 10 : 1, and the blend was further blended with water to adjust a flow value to be 170 ± 5, thereby preparing a sample.

Next, a test base plate ($70 \times 70 \times 20$ mm) was prepared in accordance with KS F 4716 (5.2), and the sample was applied onto the test base plate for molding using a mold ($40 \times 40$ mm), and cured in a curing chamber for 14 hours, thereby preparing a specimen.

The cured specimen was placed horizontally in the curing chamber, and an adhesive was applied onto the surface of the sample. Then, an upper tensile zig was adhered thereto, left to stand for 24 hours, and immersed in water again for 24 hours. The adhesion strength was measured in the wet state, and a maximum tensile load was determined by applying a tensile force vertically onto the surface of the sample using a tensile test machine. The adhesion strength was calculated using the following equation, and expressed to one digit after decimal point.

$$\text{Adhesion strength (N/mm}^2\text{)} = T/1600$$

wherein T is a maximum tensile load (N).

If the adhesion strength was measured to be 1.0 N/mm$^2$ or more, it was evaluated to be good. The results are shown in Table 2.

[Table 2]

| | Evaluation of performances of emulsion | | Evaluation of performances of emulsion powders | |
|---|---|---|---|---|
| | Polymerization stability (mg/100 g EM) | Fluidity TI value (6 rpm/60 rpm) | Redispersibilit y | water resistant adhesion strength (N/mm$^2$) |
| Example 1 | 8 | 2 | A | 1.6 |
| Example 2 | 19 | 1.9 | A | 1.1 |
| Example 3 | 20 | 1.2 | A | 1.5 |
| Example 4 | 25 | 2.2 | A | 1.2 |

(continued)

| | Evaluation of performances of emulsion | | Evaluation of performances of emulsion powders | |
| --- | --- | --- | --- | --- |
| | Polymerization stability (mg/100 g EM) | Fluidity TI value (6 rpm/60 rpm) | Redispersibilit y | water resistant adhesion strength (N/mm$^2$) |
| Comparative Example 1 | - | - | - | - |
| Comparative Example 2 | - | - | - | - |
| Comparative Example 3 | - | - | - | - |
| Comparative Example 4 | - | - | - | - |

**Claims**

1. An acrylic acid ester copolymer emulsion composition comprising:

   polyvinyl alcohol (PVA) having a degree of saponification of 85 mol% or more, and an average degree of polymerization of 300 to 1400;
   hydrophilic ethylenic unsaturated monomers having a water solubility of 1% or more, selected from the group consisting of methyl (meth)acrylate, ethyl acrylate, dimethyl (ethyl)ami-noethyl methacrylate, vinyl acetate, vinyl propionate, (meth)acrylonitrile, (meth)aerylamide, diacetone acrylamide, glycidyl methacrylate, 2-hydroxyethyl methacrylate, hydroxypropyl methacrylate, methoxyethyl (meth)acrylate, and ethoxyethyl (meth)acrylate in an amount of 20 to 70 % by weight of the total monomers contained in the emulsion composition;
   hydrophobic ethylenic unsaturated monomers having a water solubility of less than 1 % selected from the group consisting of of n-butyl (meth)acrylate, i- butyl (meth)acrylate, t-butyl (meth)acrylate, 2-ethylhexyl (meth)acrylate, stearyl (meth)acrylate, lauryl (meth)acrylate, tridecyl methacrylate, cyclohexyl methacrylate, acetoacetoxyethyl methacrylate, and styrene in an amount of 80 to 30 % by weight of the total monomers contained in the emulsion composition; and
   a lipophilic initiator.

2. The acrylic acid ester copolymer emulsion composition according to claim 1, wherein the acrylic acid copolymer ester emulsion composition comprises 4 to 15 parts by weight of PVA, and the lipophilic initiator, based on 100 parts by weight of the total monomers consisting of 40 to 60% by weight of the hydrophilic ethylenic unsaturated monomers, and 60 to 40% by weight of the hydrophobic ethylenic unsaturated monomers.

3. The acrylic acid ester copolymer emulsion composition according to claim 1 or 2, wherein said lipophilic initiator is at least one organic peroxide selected from the group consisting of benzoyl peroxide, lauryl peroxide, succinic peroxide, t-butyl peroxymaleic acid, t-butyl hydroperoxide, azobisdimethylvaleronitrile, and azoisobutyronitrile.

4. The acrylic acid ester copolymer emulsion composition according to claim 1 or 2, wherein the acrylic acid ester copolymer emulsion composition further comprises a water-soluble additive.

5. The acrylic acid ester copolymer emulsion composition according to claim 4, wherein said water-soluble additive is at least one selected from the group consisting of polyvinyl alcohol, hydroxyethyl cellulose, methyl cellulose, a starch derivative, polyvinyl pyrrol idone, polyethylene oxide, a water-soluble alkyd resin, a water-soluble phenol resin, a water-soluble urea resin, a water-soluble melamine resin, a water-soluble guanamine resin, a water-soluble naphthalenesulfonic acid resin, a water-soluble amino resin, a water-soluble polyamide resin, a water-soluble acrylic resin, a water-soluble polycarboxylic acid resin, a water-soluble polyester resin, a water-soluble polyurethane resin, a water-soluble polyol resin, a water-soluble epoxy resin, and a cationizing agent, and is added in an amount of 1 to 50 parts by weight, based on 100 parts by weight of the non-volatiles of the emulsion composition.

6.  Redispersible acrylic acid ester copolymer powders prepared by a spray- dry of the acrylic acid ester copolymer emulsion composition according to any one of claims 1, 2 and 4,

7.  An inorganic hydraulic composition comprising the redispersible acrylic acid ester copolymer powders according to claim 6, and an inorganic hydraulic material.

8.  The inorganic hydraulic composition according to claim 7, wherein the inorganic hydraulic material is at least one selected from cement-based materials, gypsum-based materials, and blast furnace slag.

**Patentansprüche**

1.  Eine Acrylsäureestercopolymer-Emulsionszusammensetzung, umfassend:

Polyvinylalkohol (PVA) mit einem Verseifungsgrad von 85 mol% oder mehr und einem durchschnittlichen Polymerisationsgrad von 300 bis 1400;
hydrophile ethylenisch ungesättigte Monomere mit einer Wasserlöslichkeit von 1% oder mehr ausgewählt aus der Gruppe bestehend aus Methyl(meth)acrylat, Ethylacrylat, Dimethyl(ethyl)aminoethylmethacrylat, Vinylacetat, Vinylpropionat, (Meth)acrylnitril, (Meth)acrylamid, Diacetonacrylamid, Glycidylmethacrylat, 2-Hydroxyethylmethacrylat, Hydroxypropylmethacrylat, Methoxyethyl(meth)acrylat, und Ethoxyethyl(meth)acrylat in einer Menge von 20 bis 70 Gew-% der Gesamtheit der in der Emulsionszusammensetzung enthaltenen Monomere; hydrophobe ethylenisch ungesättigte Monomere mit einer Wasserlöslichkeit von weniger als 1% ausgewählt aus der Gruppe bestehend aus n-Butyl(meth)acrylat, i-Butyl(meth)acrylat, t-Butyl(meth)acrylat, 2-Ethylhexyl (meth)acrylat, Stearyl(meth)acrylat, Lauryl(meth)acrylat, Tridecylmethacrylat, Cyclohexylmethacrylat, Acetoacetoxyethylmethacrylat, und Styrol, in einer Menge von 80 bis 30 Gew-% der Gesamtheit der in der Emulsionszusammensetzung enthaltenen Monomere, und
einen lipophilen Initiator.

2.  Die Acrylsäureestercopolymer-Emulsionszusammensetzung gemäß Anspruch 1, wobei die Acrylsäureestercopolymer-Emulsionszusammensetzung 4 bis 15 Gewichtsteile PVA und den lipophilen Initiator umfasst, bezogen auf 100 Gewichtsteile der Gesamtheit der Monomere, bestehend aus 40 bis 60 Gew.% der hydrophilen ethylenisch ungesättigten Monomere, und 60 bis 40 Gew.% der hydrophoben ethylenisch ungesättigten Monomere.

3.  Die Acrylsäureestercopolymer-Emulsionszusammensetzung gemäß Anspruch 1 oder 2, wobei der lipophile Initiator mindestens ein organisches Peroxid, ausgewählt aus der Gruppe bestehend aus Benzoylperoxid, Laurylperoxid, Bernsteinsäureperoxid, t-Butylperoxymaleinsäure, t-Butylhydroperoxid, Azobisdimethylvaleronitril und Azoisobutyronitril, ist.

4.  Die Acrylsäureestercopolymer-Emulsionszusammensetzung gemäß Anspruch 1 oder 2, wobei die Acrylsäureestercopolymer-Emulsionszusammensetzung zusätzlich ein wasserlösliches Additiv umfasst.

5.  Die Acrylsäureestercopolymer-Emulsionszusammensetzung gemäß Anspruch 4, wobei das wasserlösliche Additiv mindestens eines ausgewählt aus der Gruppe bestehend aus Polyvinylalkohol, Hydroxyethylcellulose, Methylcellulose, einem Stärkederivat, Polyvinylpyrrolidone, Polyethylenoxid, einem wasserlöslichen Alkydharz, einem wasserlöslichen Phenolharz, einem wasserlöslichen Harnstoffharz, einem wasserlöslichen Melaminharz, einem wasserlöslichen Guanaminharz, einem wasserlöslichen Naphtalinsulfonsäureharz, einem wasserlöslichen Aminoharz, einem wasserlöslichen Polyamidharz, einem wasserlöslichen Acrylharz, einem wasserlöslichen Polycarbonsäureharz, einem wasserlöslichen Polyesterharz, einem wasserlöslichen Polyurethanharz, einem wasserlöslichen Polyolharz, einem wasserlöslichen Epoxyharz, und einem Kationisierungsmittel ist, und in einer Menge von 1 bis 50 Gewichtsteilen, bezogen auf 100 Gewichtsteile der nicht-flüchtigen Bestandteile der Emulsionszusammensetzung, zugesetzt ist.

6.  Redispergierbare Acrylsäureestercopolymerpulver, hergestellt durch Sprühtrocknen der Acrylsäureestercopolymer-Emulsionszusammensetzung nach einem der Ansprüche 1, 2 und 4.

7.  Eine anorganische hydraulische Zusammensetzung, umfassend die redispergierbaren Acrylsäureestercopolymerpulver gemäß Anspruch 6 und ein anorganisches hydraulisches Material.

8.  Die anorganische hydraulische Zusammensetzung gemäß Anspruch 7, wobei das anorganische hydraulische Material mindestens eines ausgewählt aus zementbasierten Materialien, gipsbasierten Materialien und Hochofenschlacke ist.

## Revendications

1.  Composition de type émulsion de copolymère d'ester d'acide acrylique comprenant :

    un alcool polyvinylique (PVA) ayant un degré de saponification de 85 % en mol ou plus, et un degré moyen de polymérisation de 300 à 1400 ;
    des monomères hydrophiles à insaturation éthylénique ayant une solubilité dans l'eau de 1 % ou plus, choisis dans le groupe constitué par le (méth)acrylate de méthyle, l'acrylate d'éthyle, le méthacrylate de diméthyl(éthyl) aminoéthyle, l'acétate de vinyle, le propionate de vinyle, le (méth)acrylonitrile, le (méth)acrylamide, le diacétone- acrylamide, le méthacrylate de glycidyle, le méthacrylate de 2-hydroxyéthyle, le méthacrylate d'hydroxypropyle, le (méth)acrylate de méthoxyéthyle, et le (méth)acrylate d'éthoxyéthyle, en une quantité de 20 à 70 % en poids des monomères totaux contenus dans la composition de type émulsion ;
    des monomères hydrophobes à insaturation éthylénique ayant une solubilité dans l'eau inférieure à 1 % choisis dans le groupe constitué par le (méth)acrylate de n-butyle, le (méth)acrylate de i-butyle, le (méth)acrylate de t-butyle, le (méth)acrylate de 2-éthylhexyle, le (méth)acrylate de stéaryle, le (méth)acrylate de lauryle, le méthacrylate de tridécyle, le méthacrylate de cyclohexyle, le méthacrylate d'acétoacétoxyéthyle, et le styrène, en une quantité de 80 à 30 % en poids des monomères totaux contenus dans la composition de type émulsion ; et
    un amorceur lipophile.

2.  Composition de type émulsion de copolymère d'ester d'acide acrylique selon la revendication 1, ladite composition de type émulsion de copolymère d'ester d'acide acrylique comprenant 4 à 15 parties en poids de PVA , et l'amorceur lipophile, pour 100 parties en poids des monomères totaux constitués par 40 à 60 % en poids de monomères hydrophiles à insaturation éthylénique, et 60 à 40 % en poids de monomères hydrophobes à insaturation éthylénique.

3.  Composition de type émulsion de copolymère d'ester d'acide acrylique selon la revendication 1 ou 2, dans laquelle ledit amorceur lipophile est au moins un peroxyde organique choisi dans le groupe constitué par le peroxyde de benzoyle, le peroxyde de lauryle, le peroxyde succinique, l'acide t-butylperoxymaléique, l'hydroperoxyde de t-butyle, l'azobisdiméthylvaléronitrile, et l'azoisobutyronitrile.

4.  Composition de type émulsion de copolymère d'ester d'acide acrylique selon la revendication 1 ou 2, ladite composition de type émulsion de copolymère d'ester d'acide acrylique comprenant en outre un additif hydrosoluble.

5.  Composition de type émulsion de copolymère d'ester d'acide acrylique selon la revendication 4, dans laquelle ledit additif hydrosoluble est au moins un choisi dans le groupe constitué par l'alcool polyvinylique, l'hydroxyéthyl-cellulose, la méthylcellulose, un dérivé d'amidon, la polyvinylpyrrolidone, l'oxyde de polyéthylène, une résine alkyde hydrosoluble, une résine phénolique hydrosoluble, une résine urée hydrosoluble, une résine mélamine hydrosoluble, une résine guanamine hydrosoluble, une résine acide naphtalènesulfonique hydrosoluble, une résine amino hydrosoluble, une résine polyamide hydrosoluble, une résine acrylique hydrosoluble, une résine acide polycarboxylique hydrosoluble, une résine polyester hydrosoluble, une résine polyuréthanne hydrosoluble, une résine polyol hydrosoluble, une résine époxy hydrosoluble, et un agent cationisant, et est ajouté en une quantité de 1 à 50 parties en poids, pour 100 parties en poids des non-volatils de la composition de type émulsion.

6.  Poudres à base de copolymère d'ester d'acide acrylique redispersibles préparées par séchage par atomisation de la composition de type émulsion de copolymère d'ester d'acide acrylique selon l'une quelconque des revendications 1, 2 et 4.

7.  Composition hydraulique inorganique comprenant les poudres à base de copolymère d'ester d'acide acrylique redispersibles selon la revendication 6, et un matériau hydraulique inorganique.

8.  Composition hydraulique inorganique selon la revendication 7, dans laquelle le matériau hydraulique inorganique est au moins un choisi parmi les matériaux à base de ciment, les matériaux à base de gypse, et le laitier de haut fourneau.